# EUROPEAN PATENT APPLICATION

(11) **EP 4 528 982 A1**
(43) Date of publication of application: **26.03.2025**
(21) Application number: 23824073.3
(22) Date of filing: 21.04.2023
(51) Int. Cl.: H02J 50/10, H02M 3/07, H02M 7/219, H02M 3/335, H02J 7/00

(54) **ELECTRONIC DEVICE FOR WIRELESSLY RECEIVING POWER, AND METHOD FOR OPERATING SAME**

(30) Priority: 17.06.2022 KR 20220073977; 21.07.2022 KR 20220090586
(71) Applicant: Samsung Electronics Co., Ltd., Suwon-si, Gyeonggi-do 16677 (KR)
(72) Inventor: KANG, Sangwoo, Suwon-si, Gyeonggi-do 16677 (KR); CHOI, Hangseok, Suwon-si, Gyeonggi-do 16677 (KR)
(74) Representative: Gulde & Partner
(86) International application number: PCT/KR2023/005484
(87) International publication number: WO 2023/243847

(57) **Abstract**

An electronic device for wirelessly receiving power, according to various embodiments, comprises: a coil; a rectifier circuit comprising a plurality of switches; a charging circuit; and a control circuit, wherein the control circuit may be configured to: confirm, on the basis of power received wirelessly from an external electronic device, the size of a first current outputted to the charging circuit; control, on the basis of the size of the first current, the rectifier circuit so that the plurality of switches included in the rectifier circuit operate as any one of a full bridge circuit or a voltage doubler circuit; and provide, to the charging circuit, power rectified using the rectifier circuit. Various other embodiments may be possible.

## Description

### [Technical Field]

Various embodiments relate to an electronic device for wirelessly receiving power and a method of operating the same.

### [Background Art]

With the development of wireless charging technology, a method of supplying power to various electronic devices and charging the electronic devices through one charging device is being researched. The wireless charging technology uses wireless power transmission and reception and corresponds to, for example, a system that automatically charges a battery by simply placing an electronic device on a charging pad without any connection of the electronic device to a separate charging connector.

The wireless charging technology includes an electromagnetic induction scheme, a resonance scheme using resonance, and a radio wave (radio frequency (RF)/microwave radiation) scheme for converting electrical energy to microwaves and then transmitting the microwaves.

A power transmission method by wireless charging is a method of transmitting power between a first coil on a transmitting side and a second coil on a receiving side. A magnetic field may be generated at the transmitting side, and current may be induced or resonated according to a change in the magnetic field to create energy at the receiving side.

The wireless power transmission technology using the electromagnetic induction scheme is a method of transmitting power using an electromagnetic field induced in a coil. Through the wireless power transmission technology, a wireless power transmission device may apply current to a transmission coil to generate an electromagnetic field and an induced electromotive force may be formed in a reception coil of a wireless power reception device by the generated electromagnetic field, so that the power may be wirelessly transmitted.

### [Detailed Description of the Invention]

### [Technical Problem]

In a mobile environment, a wireless power transmission device (or a wireless power reception device) may have a small inductor value due to a small transmission coil (or reception coil), and a coupling coefficient between the transmission coil and the reception coil may be small. Further, in the mobile environment, the wireless power transmission device may transmit power to the wireless power reception device by using a low frequency band. Accordingly, the wireless power transmission device may have power loss due to the magnetizing current. Further, when the size of the current applied to a charging circuit is small in the wireless power reception device, the rectified voltage may be increased for stability and efficiency. Therefore, the power loss of the wireless power transmission device may be increased by the magnetizing current.

### [Technical Solution]

Various embodiments may provide an electronic device for wirelessly receiving power and a method of operating the same to control the form of switches included in a rectification circuit of the electronic device, based on the size of a current applied to a charging circuit included in the electronic device so that power loss due to a magnetizing current decreases and power transmission efficiency increases in a wireless power transmission device.

An electronic device wirelessly receiving power according to various embodiments may include a coil, a rectification circuit including a plurality of switches, a charging circuit, and a control circuit, wherein the control circuit may be configured to identify a size of a first current output to the charging circuit, based on power wirelessly received from an external electronic device, control the rectification circuit to operate the plurality of switches included in the rectification circuit as one of a full bridge circuit or a voltage doubler circuit, based on the size of the first current, and provide power rectified using the rectification circuit to the charging circuit.

A method of operating an electronic device wirelessly receiving power according to various embodiments may include identifying a size of a first current output to a charging circuit included in the electronic device, based on power wirelessly received from an external electronic device through a coil included in the electronic device, controlling a rectification circuit to operate a plurality of switches included in the rectification circuit in the electronic device as one of a full bridge circuit or a voltage doubler circuit, based on the size of the first current, and providing power rectified using the rectification circuit to the charging circuit.

### [Advantageous Effects]

An electronic device wirelessly receiving power according to various embodiments can increase efficiency of power transmission between an electronic device for wirelessly transmitting power and the electronic device for wirelessly receiving power.

### [Brief Description of Drawings]

FIG. 1 is a block diagram illustrating an electronic device for wirelessly transmitting power and an electronic device for wirelessly receiving power according to various embodiments.
FIG. 2A is a block diagram illustrating a wireless power transmission device and a wireless power reception device according to various embodiments.
FIG. 2B is a block diagram illustrating a method by which the wireless power reception device controls a plurality of switches according to various embodiments.
FIGs. 3A and 3B are diagrams illustrating a method of controlling a plurality of switches included in a rectification circuit in a full bridge form according to various embodiments.
FIGs. 4A, 4B, 4C, and 4D are diagrams illustrating a method of controlling the plurality of switches included in the rectification circuit in a voltage doubler form according to various embodiments.
FIG. 5A is a flowchart illustrating a method by which the wireless power reception device controls the form of a switch circuit, based on the size of a current applied to a charging circuit according to various embodiments.
FIG. 5B is a flowchart illustrating a method by which the wireless power reception device controls the form of the switch circuit, based on the size of the current applied to the charging circuit according to various embodiments.
FIG. 6 is a flowchart illustrating a method by which the wireless power reception device controls the form of the switch circuit, based on the size of the current applied to the charging circuit according to various embodiments.
FIG. 7 is a flowchart illustrating a method by which the wireless power reception device controls a reference value, based on a temperature according to various embodiments.
FIG. 8A illustrates graphs for a current conducted to a reception coil, a current conducted to a transmission coil, a magnetizing current of the wireless power transmission device, and a rectified voltage when the size of the current applied to the charging circuit is a first value according to various embodiments.
FIG. 8B illustrates the size of power required for providing the current having the first value to the charging circuit according to various embodiments.
FIG. 9A illustrates graphs for a current conducted to a reception coil, a current conducted to a transmission coil, a magnetizing current of the wireless power transmission device, and a rectified voltage when the size of the current applied to the charging circuit is a second value according to various embodiments.
FIG. 9B illustrates the size of power required for providing the current having the second value to the charging circuit according to various embodiments.
FIG. 10 is a block diagram illustrating the electronic device with a network environment according to various embodiments.

### [Mode for Carrying out the Invention]

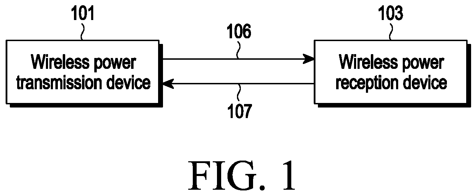

FIG. 1 is a block diagram illustrating an electronic device (hereinafter, referred to as a wireless power transmission device) for wirelessly transmitting power and an electronic device (hereinafter, referred to as a wireless power reception device) for wirelessly receiving power according to various embodiments.

Referring to FIG. 1, a wireless power transmission device 101 according to various embodiments may wirelessly transmit power 106 to a wireless power reception device 103. Alternatively, the wireless power transmission device 101 may receive information 107 from the wireless power reception device 103. In one example, the wireless power transmission device 101 may transmit the power 106 according to an induction scheme. When the wireless power transmission device 101 is based on the induction scheme, the wireless power transmission device 101 may include at least one of, for example, a power source, a DC-DC converting circuit (for example, a DC/DC converter), a DC-AC converting circuit (for example, an inverter), an amplification circuit, an impedance matching circuit, at least one capacitor, at least one coil, or a communication modulation circuit. At least one capacitor and at least one coil may configure a resonance circuit. In one embodiment, the wireless power transmission device 101 may be implemented by a scheme defined in the wireless power consortium (WPC) Qi standard. When the current flows according to the induction scheme, the wireless power transmission device 101 may include a coil for generating an induced magnetic field. A process in which the wireless power transmission device 101 generates the induced magnetic field can be expressed as wireless transmission of the power 106 by the wireless power transmission device 101. Further, on the coil of the wireless power reception device 103, an induced electromotive force (or current, voltage, and/or power) may be generated by the magnetic field generated around thereof according to the resonance scheme or the induction scheme. A process of generating the induced electromotive force through the coil can be expressed as wireless reception of the power 106 by the wireless power reception device 103.

The wireless power transmission device 101 according to various embodiments may communicate with the wireless power reception device 103. For example, the wireless power transmission device 101 may communicate with the wireless power reception device 103 according to an in-band scheme. The wireless power transmission device 101 may modulate data to be transmitted according to, for example, a frequency shift keying (FSK) modulation scheme, and the wireless power reception device 103 may perform modulation according to an amplitude shift keying (ASK) modulation scheme to provide the information 107. The wireless power transmission device 101 may identify the information 107 provided by the wireless power reception device 103, based on amplitude of the current and/or voltage applied to the transmission coil. FIG. 1 illustrates that the wireless power reception device 103 directly transmits the information 107 to the wireless power transmission device 101, but it is only for easy understanding and may be understood by those skilled in the art that the wireless power reception device 103 controls only on/off of at least one switch therein. An operation of performing modulation based on the ASK modulation scheme and/or the FSK modulation scheme may be understood as an operation of transmitting data (or packets) according to an in-band communication scheme, and an operation of performing demodulation based on an ASK demodulation scheme and/or a FSK demodulation scheme may be understood as an operation of receiving data (or packets) according to an in-band communication scheme.

In this document, the performance of a specific operation by the wireless power transmission device 101 or the wireless power reception device 103 may mean that various hardware, for example, a controller (for example, a micro controlling unit (MCU), a field programmable gate array (FPGA), an application specific integrated circuit (ASIC), a micro processor, or an application processor (AP)) included in the wireless power transmission device 101 or the wireless power reception device 103 perform a specific operation. Alternatively, the performance of a specific operation by the wireless power transmission device 101 or the wireless power reception device 103 may mean that the controller controls other hardware to perform the specific operation. Alternatively, the performance of a specific operation by the wireless power transmission device 101 or the wireless power reception device 103 may mean to cause the controller or other hardware to perform the specific operation according to execution of at least one instruction for performing the specific operation stored in a storage circuit (for example, a memory) of the wireless power transmission device 101 or the wireless power reception device 103.

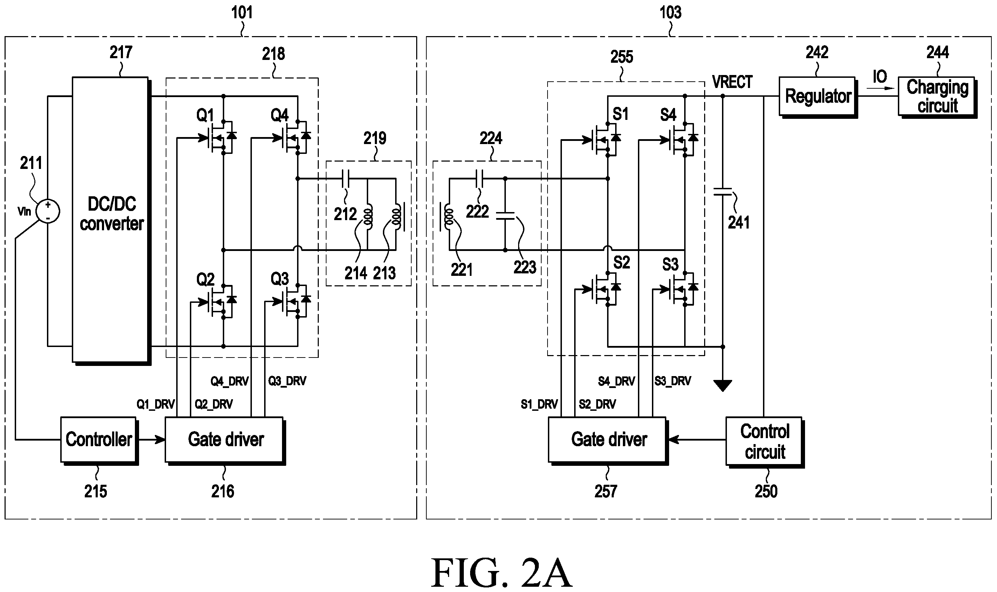

FIG. 2A is a block diagram illustrating the wireless power transmission device and the wireless power reception device according to various embodiments.

Referring to FIG. 2A, according to various embodiments, the wireless power transmission device 101 may include at least one of a power source 211, an inverter 218 including a plurality of switches Q1, Q2, Q3, and Q4, a capacitor 212, a transmission coil 213, a manetizing inductor 214, a controller 215, or a DC/DC converter 217.

According to various embodiments, power provided by the power source 211 may be provided to the DC/DC converter 217. The power source 211 may include at least one of an interface to be connected to an external travel adapter (TA), a battery (not shown) of the wireless power transmission device 101, a charger (not shown), or a power management integrated circuit (PMIC) (not shown). The power source 211 may provide, for example, DC power to the DC/DC converter 217, but there is no limitation in the form of provided power. The DC/DC converter 217 may convert the voltage of the provided power and provide the same to the inverter 218. The DC/DC converter 217 may change the voltage of the input DC power and provide the DC power having the changed voltage (or driving voltage (V_{DD})) to the inverter 218. The DC/DC converter 217 may perform, for example, buck converting and/or boost converting, and may be implemented as, for example, a 3-level converter, but it may be understood by those skilled in the art that there is no limitation in the type thereof.

The inverter 218 according to various embodiments may output AC power by using the driving voltage provided from the DC/DC converter 217. The plurality of switches Q1, Q2, Q3, and Q4 may constitute, for example, a full bridge circuit, but there is no limitation in the number of switches or the type of the bridge circuit. For example, when the full bridge circuit is configured, one end of the transmission coil 213 may be connected to a connection point between the switches Q1 and Q2 through the capacitor 212, and the other end of the transmission coil 213 may be connected to a connection point between the switches Q3 and Q4. The plurality of switches Q1, Q2, Q3, and Q4 may be controlled to be in an on state or an off state. For example, in order to generate AC power, the controller may control the first switch Q1 and the third switch Q3 to be in the on state and the second switch Q2 and the fourth switch Q4 to be in the off state during a first period, and control the first switch Q1 and the third switch Q3 to be in the off state and the second switch Q2 and the fourth switch Q4 to be in the on state during a second period, and may repeatedly perform the control operations. The controller 215 may provide control signals Q1_DRV, Q2_DRV, Q3_DRV, and Q4_DRV for generating the AC power to the plurality of switches Q1, Q2, Q3, and Q4 by controlling a gate driver 216. For example, the gate driver 216 may provide the control signals Q1_DRV, Q2_DRV, Q3_DRV, and Q4_DRV to the plurality of switches Q1, Q2, Q3, and Q4 according to the control of the controller 215. Not only outputting the control signal but also refraining from the output of the control signal may be named the control of the controller 215. For example, outputting, by the controller 215, a first control signal for generating AC power having a first frequency to the inverter 217 may mean that the controller 215 outputs control signals Q1_DRV and Q3_DRV for controlling the switches Q1 and Q3 to be in the on state during a period corresponding to the first frequency and then outputs control signals Q2_DRV and Q4_DRV for controlling the switches Q2 and Q4 to be in the on state during the period corresponding to the first frequency, and repeats the output operations. Meanwhile, outputting, by the controller 215, a second control signal for generating AC power having a second frequency to the inverter 217 may mean that the controller 215 outputs control signals Q1_DRV and Q3_DRV for controlling the switches Q1 and Q3 to be in the on state during a period corresponding to the second frequency and then outputs control signals Q2_DRV and Q4_DRV for controlling the switches Q2 and Q4 to be in the on state during the period corresponding to the second frequency, and repeats the output operations, in which case the period corresponding to the second frequency may be different from the period corresponding to the first frequency.

According to various embodiments, the AC power generated by the inverter 218 may be applied to the transmission coil 213. The capacitor 212 may configure the transmission coil 213, the magnetizing inductor 214, and a resonance circuit 219. The transmission coil 213 may configure a magnetic field, based on the applied AC power. Some of the magnetic field (or magnetic flux) configured by the transmission coil 213 may pass through a cross section of a reception coil 221 of the wireless power reception device 103. According to a change in the magnetic field passing through the cross section of the reception coil 221 as time goes by, an induced electromotive force (for example, current, voltage, or power) may be generated in the reception coil 221.

According to various embodiments, the AC power generated by the inverter 218 may be applied to the magnetizing inductor 214. For example, as the reception coil 221 of the wireless power reception device 103 is arranged near the transmission coil 213 of the wireless power transmission device 101, inductance of the transmission coil 213 of the wireless power transmission device 101 may be changed. For example, an inductor equivalently connected to the transmission coil 213 in parallel may be considered and may be referred to as the magnetizing inductor 214. For example, the magnetizing inductor 214 may be a virtual inductor having an inductance value corresponding to a change in inductance of the transmission coil 213, rather than the inductor included in the real circuit. The magnetizing inductor 214 may be equivalently modeled by a coupling coefficient between the wireless power transmission device 101 and the wireless power reception device 103. For example, inductance (or an inductance value) of the magnetizing inductor 214 may be determined by a coupling coefficient (coupling ratio) between the transmission coil 213 and the reception coil 221. The magnetizing current may be generated after the voltage applied to the transmission coil 213 is applied to the magnetizing inductor 214. At this time, the magnetizing current is not the current transmitted to the reception coil 221 and may circulate in the wireless power transmission device 101 and cause power loss or conduction loss.

According to various embodiments, in a mobile environment, the wireless power transmission device 101 (or the wireless power reception device 103) may have a small inductor value due to the small size of the transmission coil 213 (or the reception coil 221), and the coupling coefficient between the transmission coil 213 and the reception coil 221 may be small. Further, in the mobile environment, the wireless power transmission device 101 may transmit power by using a low frequency band. Accordingly, regardless of the size of the current provided to the wireless power reception device 103, the wireless power transmission device 101 may have almost fixed power loss due to the magnetizing current. Further, when the size of the current applied to the charging circuit 244 is small in the wireless power reception device 103, a rectified voltage (VRECT) may be increased for stability and efficiency. Accordingly, the power loss due to the magnetizing current may increase in the wireless power transmission device 101. Therefore, the wireless power reception device 103 according to various embodiments may provide a method of reducing power loss due to the magnetizing current.

According to various embodiments, the controller 215 may identify information provided by the wireless power reception device 103 through the transmission coil 213. The controller 215 may perform analog-to-digital converting (ADC) on, for example, a signal received through the transmission coil 213. The controller 215 may decode a digital value acquired as a result of the ADC and identify information provided by the wireless power reception device 103 according to a decoding result. A decoding scheme may follow, for example, the Qi standard, but it may be understood by those skilled in the art that there is no limitation therein.

According to various embodiments, the wireless power reception device 103 may include at least one of the reception coil 221, a capacitor 222, a capacitor 223, a rectification circuit 255, a controller 250, a gate driver 257, a plurality of switches S1, S2, S3, and S4, a capacitor 241, a regulator 242, or a charging circuit 244.

According to various embodiments, the reception coil 221, the capacitor 222, and the capacitor 223 may be included in the resonance circuit 224. One end of the capacitor 222 may be connected to the reception coil 221, and the other end of the capacitor 222 may be connected to one end of the capacitor 223 and one end of the rectification circuit 255. One end of the capacitor 223 may be connected to the other end of the capacitor 222, and the other end of the capacitor 223 may be connected to the other end of the reception coil 221. In other words, the capacitor 223 may be connected to a circuit configured by the serial connection of the reception coil 221 and the capacitor 222. The other end of the capacitor 223 may be connected to the other end of the rectification circuit 255.

According to various embodiments, the rectification circuit 255 may include the plurality of switches S1, S2, S3, and S4 that may be included in a full bridge circuit or a voltage doubler circuit. One end of the resonance circuit 224 may be connected to a connection point between the switches S1 and S2, and the other end of the resonance circuit may be connected to a connection point between the switches S3 and S4. For example, one end of the first switch S1 and one end of the fourth switch S4 may be connected to the regulator 242, and one end of the second switch S2 and one end of the third switch S3 may be connected to the other end of the first switch S1 and the other end of the fourth switch S4, respectively. The other end of the second switch S2 and the other end of the third switch S3 may be connected to the ground. The other end of the first switch S1 and one end of the second switch S2 may be connected to one end of the reception coil 221, and one end of the third switch S3 and the other end of the fourth switch S4 may be connected to the other end of the reception coil 221. The rectification circuit 255 may convert the AC power received through the reception coil 221 into DC power. The controller 250 may control on/off states of the plurality of switches S1, S2, S3, and S4 so that the AC power can be converted into the DC power. The control circuit 250 may rectify a power signal received from the reception coil 221 and supply the rectified power signal to the regulator 242.

According to various embodiments, the control circuit 250 may provide control signals S1_DRV, S2_DRV, S3_DRV, and S4_DRV for generating the AC power to the plurality of switches S1, S2, S3, and S4 by controlling the gate driver 257. For example, the gate driver 257 may provide the control signals S1_DRV, S2_DRV, S3_DRV, and S4_DRV to the plurality of switches S1, S2, S3, and S4 according to the control of the control circuit 250. Not only outputting the control signal but also refraining from the output of the control signal may be named the control of the control circuit 250.

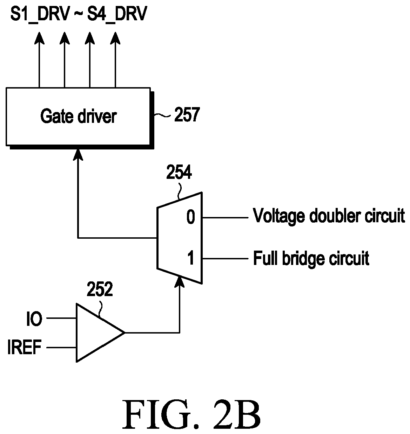

According to various embodiments, the plurality of switches S1, S2, S3, and S4 may be implemented as a switch circuit. For example, each of the plurality of switches S1, S2, S3, and S4 may be turned on/off according to the control of the control circuit 255 and, accordingly, may be implemented as a switch circuit (for example, a full bridge circuit or a voltage doubler) capable of performing a specific function. For example, the plurality of switches S1, S2, S3, and S4 may be implemented by a metal oxide semiconductor field effect (MOSFET). Meanwhile, the number or the type of switches illustrated in FIG. 2 is only an example, and embodiments of the disclosure are not limited thereto.

According to various embodiments, the capacitor 241 and the regulator 242 may be connected to the rectification circuit 255. One end of the capacitor 241 may be grounded. The regulator 242 may perform converting (for example, buck converting and/or boost converting) and/or regulating on the voltage of the rectified power output from the rectification circuit 255.

According to various embodiments, the charging circuit (or charger) 244 may charge a battery (not shown) by using the power converted and/or regulated by the regulator 242. According to various embodiments, the charging circuit 244 may control the voltage and/or the current for charging the battery according to a battery charging mode (for example, a constant current (CC) mode, a constant voltage (CV) mode, or a quick charging mode). According to implementation, in replacement of the charging circuit 244, a PMIC (not shown) may be connected to the regulator 242.

According to various embodiments, the control circuit 250 may identify the size of the current (IO) provided to the charging circuit 244. For example, the control circuit 250 may identify or monitor the size of the current (IO) applied from the regulator 242 to the charging circuit 244. Alternatively, the control circuit 250 may receive information on the size of the current (IO) applied to the charging circuit 244 from the charging circuit 244 and identify the size of the current (IO) by using the received information.

According to various embodiments, the control circuit 250 may control the form of the plurality of switches S1, S2, S3, and S4 included in the rectification circuit 255, based on the size of the current (IO) applied to the charging circuit 244. For example, the control circuit 250 may configure the form of the plurality of switches S1, S2, S3, and S4 as a circuit having one of the full bridge form and the voltage doubler form, based on the size of the current (IO) applied to the charging circuit 244 and at least one reference value (IREF). At this time, the control circuit 250 may compare at least one designated reference value (IREF) and the size of the current (IO) and control the form of the plurality of switches S1, S2, S3, and S4 included in the rectification circuit 255, based on the comparison result. For example, at least one reference value may be a value that is a reference for controlling the plurality of switches S1, S2, S3, and S4 to be one of the full bridge circuit or the voltage doubler circuit. For example, at least one reference value may be designated by the control circuit 250 or a user. Further, at least one reference value may be stored in memory (not shown) of the wireless power reception device 103.

FIG. 2B is a block diagram illustrating a method by which the wireless power reception device controls the plurality of switches according to various embodiments.

Referring to FIG. 2B, the control circuit 250 may include a compactor 252 and a multiplexer 254. For example, at least one of the comparator 252 and the multiplexer 254 may be implemented in hardware or software.

According to various embodiments, the comparator 252 may compare at least one reference value (IREF) and the size of the current (IO) and output a result value to the multiplexer 254, based on the comparison result. The multiplexer 254 may output a signal indicating one of the voltage doubler or the full bridge to the gate driver 257, based on the result value. For example, the multiplexer 254 may output a signal of "0" indicating the voltage doubler, based on the result value. Alternatively, the multiplexer 254 may output a signal of "1" indicating the full bridge, based on the result value. The gate driver 257 may output signals S1_DRV, S2_DRV, S3_DRV, and S4_DRV for controlling the plurality of switches S1, S2, S3, and S4, based on the signal output from the multiplexer 254.

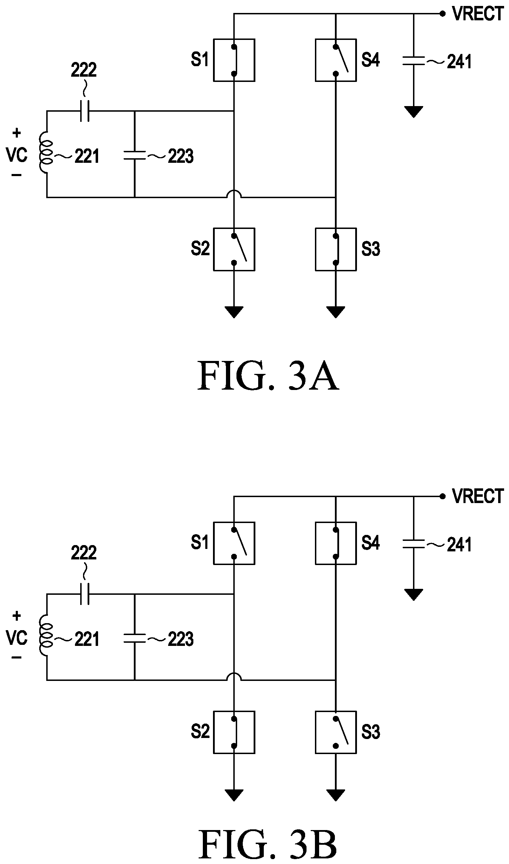

FIGs. 3A and 3B are diagrams illustrating a method of controlling the plurality of switches included in the rectification circuit in a full bridge form according to various embodiments.

Referring to FIGs. 3A to 3B, according to various embodiments, the control circuit 250 may control the plurality of switches S1, S2, S3, and S4 included in the rectification circuit 255 to be in the full bridge form through the gate driver 257, based on the size of the current applied to the charging circuit 244. According to another embodiment, the control circuit 250 may control the plurality of switches S1, S2, S3, and S4 to be in the full bridge form without the gate driver 257.

According to various embodiments, the plurality of switches S1, S2, S3, and S4 included in the rectification circuit 255 may be implemented as a full bridge circuit. For example, as illustrated in FIG. 3A, the control circuit 250 may configure the first switch S1 and the third switch S3 as a closed state and configure the second switch S2 and the fourth switch S4 as an open state during a first period. As illustrated in FIG. 3B, the control circuit 250 may configure the first switch S1 and the third switch S3 as the open state and configure the second switch S2 and the fourth switch S4 as the closed state during a second period after the first period. The control circuit 250 may continuously repeat the configuration to rectify a power signal received from the reception coil 221 and supply the power signal to the regulator 242 while the battery is charged. At this time, the rectified voltage (VRECT) may have a voltage value that is the same as a coil voltage (VC). For example, the coil voltage (VC) may vary depending on the time. For example, the coil voltage (VC) varying depending on the time may be referred to as a coil voltage VC(t). A maximum value of the rectified voltage (VREC) may be substantially a maximum value (or Max value) of the coil voltage (VC or VC(t)).

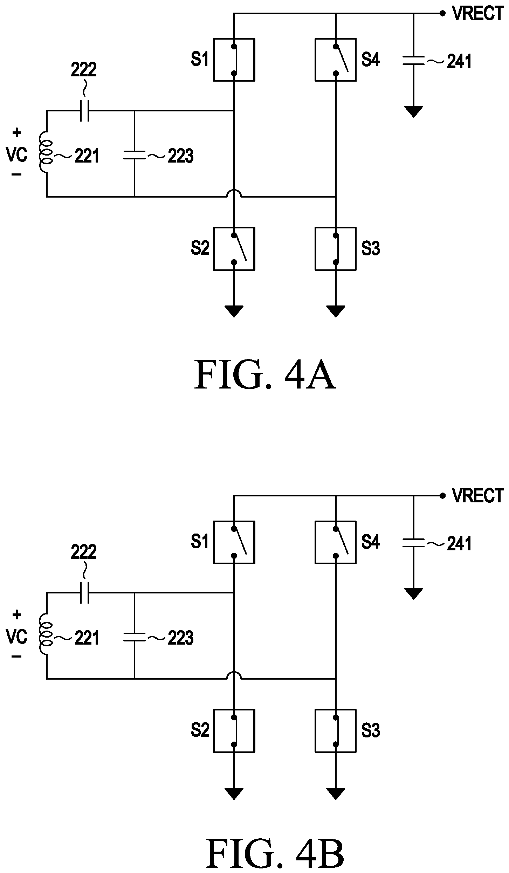

FIGs. 4A to 4D are diagrams illustrating a method of controlling the plurality of switches included in the rectification circuit in a voltage doubler form according to various embodiments.

Referring to FIGs. 4A to 4D, according to various embodiments, the control circuit 250 may control the plurality of switches S1, S2, S3, and S4 included in the rectification circuit 255 to be in a voltage doubler form through the gate driver 257, based on the size of the current applied to the charging circuit 244. According to another embodiment, the control circuit 250 may control the plurality of switches S1, S2, S3, and S4 to be in a voltage doubler form without the gate driver 257.

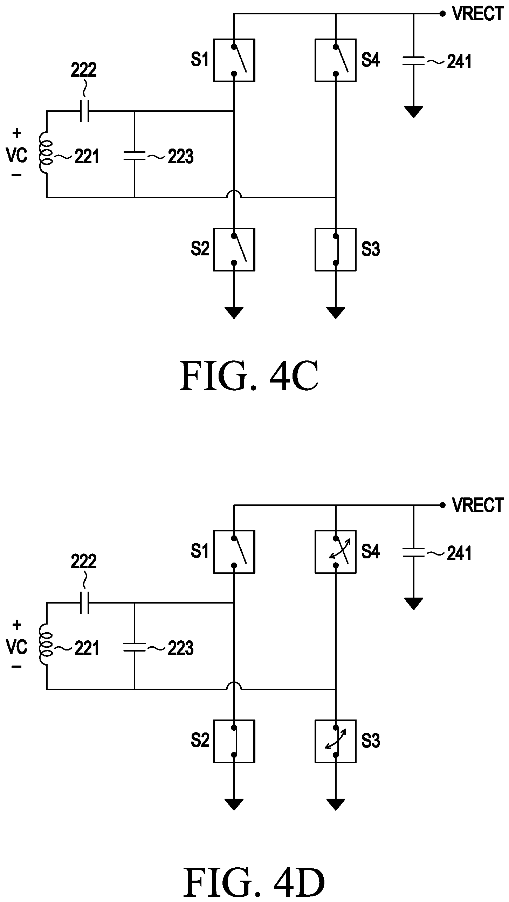

According to various embodiments, the plurality of switches S1, S2, S3, and S4 included in the rectification circuit 255 may be implemented as a voltage doubler circuit. For example, as illustrated in FIGs. 4A to 4C, the control circuit 250 may configure the third switch S3 as a closed state and configure the fourth switch S4 as an open state. For example, when the voltage doubler circuit is implemented, the control circuit 250 may maintain the third switch S3 as the closed state and maintain the fourth switch S4 as the open state. As illustrated in FIG. 4A, the control circuit 250 may configure the first switch S1 as the closed state and configure the second switch S2 as the open state during a first period while maintaining the third switch S3 as the closed state and maintaining the fourth switch S4 as the open state. As illustrated in FIG. 4B, the control circuit 250 may configure the first switch S1 as the open state and configure the second switch S2 as the closed state during a second period after the first period while maintaining the third switch S3 as the closed state and maintaining the fourth switch S4 as the open state. As illustrated in FIG. 4C, the control circuit 250 may configure the first switch S1 as the open state and configure the second switch S2 as the open state during a third period after the second period while maintaining the third switch S3 as the closed state and maintaining the fourth switch S3 as the open state. The control circuit 250 may continuously repeat the configuration to rectify a power signal received from the reception coil 221 and supply the power signal to the regulator 242 while the battery is charged. At this time, the rectified voltage (VRECT) may be twice the coil voltage (VC). Further, since the coil voltage (VC) decreases, the coil current conducted to the reception coil 221 according to the input/output power relationship may be twice the rectified current provided to the regulator 242. As the coil voltage (VC) decreases, the size of the magnetizing current of the wireless power transmission device 101 may decrease. Further, as the coli voltage (VC) decreases, the size of the coil current conducted to the reception coil 221 of the wireless power reception device 101 may increase. For example, the coil voltage (VC) may vary depending on the time. For example, the coil voltage (VC) varying depending on the time may be referred to as a coil voltage VC(t). A maximum value of the rectified voltage (VREC) may be substantially maximum value (or Max value) * 2 of the coil voltage (VC or VC(t)).

According to various embodiments, as illustrated in FIG. 4D, the control circuit 250 may configure the first switch S1 as the open state and configure the second switch S2 as the closed state. For example, when the voltage doubler circuit is implemented, the control circuit 250 may maintain the first switch S1 as the open state and maintain the second switch S2 as the closed state. At this time, similar to the description made with reference to FIGs. 4A to 4C, the control circuit 250 may control each of the third switch S3 and the fourth switch S4 to be in the closed state or the open state during the first period, the second period, or the third period. Accordingly, the plurality of switches S1, S2, S3, and S4 may be implemented as the voltage doubler circuit.

As described above, the voltage doubler circuit may be implemented in the state where the third switch S3 is maintained as the closed state and the fourth switch S4 is maintained as the open state as illustrated in FIGs. 4A to 4C or where the first switch S1 is maintained as the open state and the second switch S2 is maintained as the closed state as illustrated in FIG. 4D.

According to various embodiments, unlike FIGs. 4A to 4C, the control circuit 250 may implement the voltage doubler circuit by maintaining the third switch S3 as the open state and the fourth switch S4 as the closed state. For example, when the voltage doubler circuit is implemented, the control circuit 250 may control the first switch S1 and the second switch S2 to be alternately in the open state and/or the closed state in the state where the third switch S3 is maintained as the open state and the fourth switch S4 is maintained as the closed state. The operation of controlling the first switch S1 and the second switch S2 to be alternately in the open state and/or the closed state may be performed similarly to FIGs. 4A to 4C.

According to various embodiments, unlike FIG. 4D, the control circuit 250 may implement the voltage doubler circuit by maintaining the first switch S1 as the closed state and the second switch S2 as the open state. For example, when the voltage doubler circuit is implemented, the control circuit 250 may control the third switch S3 and the fourth switch S4 to be alternately in the open state and/or the closed state in the state where the first switch S1 is maintained as the closed state and the second switch S2 is maintained as the open state. The operation of controlling the third switch S3 and the fourth switch S4 to be alternately in the open state and/or the closed state may be performed similarly to FIGs. 4A to 4C.

At least some of the operations of the wireless power reception device 103 described below may be performed by the control circuit 250. However, for convenience of description, it will be described that the wireless power reception device 103 performs the corresponding operations.

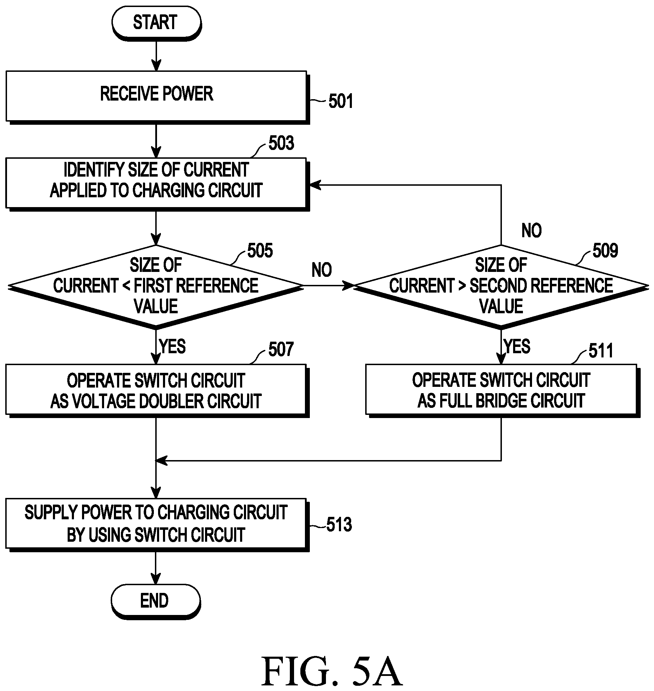

FIG. 5A is a flowchart illustrating a method by which the wireless power reception device controls the form of the switch circuit, based on the size of the current applied to the charging circuit according to various embodiments.

Referring to FIG. 5A, according to various embodiments, in operation 501, the wireless power reception device 103 may receive power from the wireless power transmission device 101. For example, the wireless power reception device 103 may rectify, through the rectification circuit 255, the power received from the wireless power transmission device 101 to charge a battery included in the power reception device 103.

According to various embodiments, in operation 503, the wireless power reception device 103 may identify the size of the current applied to the charging circuit 244. For example, the wireless power reception device 103 may identify the size of the current applied in real time or periodically to the charging circuit 244.

According to various embodiments, in operation 505, the wireless power reception device 103 may identify whether the size of the current is smaller than a first reference value. For example, the first reference value may be a reference value for determining whether to change a switch circuit including the plurality of switches S1, S2, S3, and S4 to a voltage doubler form.

According to various embodiments, when it is identified that the size of the current is smaller than the first reference value (Yes of operation 505), the wireless power reception device 103 may control the rectification circuit such that the switch circuit operates as the voltage doubler circuit in operation 507. In operation 513, the wireless power reception device 103 may supply power to the charging circuit 244 by using the switch circuit of the voltage doubler circuit.

According to various embodiments, when it is identified that the size of the current is not smaller than the first reference value (No of operation 505), the wireless power reception device 103 may identify whether the size of the current is larger than a second reference value in operation 511. For example, the second reference value may be a reference value for determining whether to change the switch circuit including the plurality of switches S1, S2, S3, and S4 to a full bridge circuit. For example, the second reference value may be larger than the first reference value.

According to various embodiments, when it is identified that the size of the current is larger than the second reference value (Yes of operation 509), the wireless power reception device 103 may control the rectification circuit such that the switch circuit operates as the full bridge circuit in operation 511. In operation 513, the wireless power reception device 103 may supply power to the charging circuit 244 by using the switch circuit of the full bridge circuit.

According to various embodiments, when it is identified that the size of the current is not larger than the second reference value (No of operation 509), the wireless power reception device 103 may identify the size of the current applied to the charging circuit 244. At this time, the wireless power reception device 103 may not change the operation of the switch circuit. Further, the wireless power reception device 103 may supply power to the charging circuit 244 while maintaining the operation of the existing switch circuit (for example, the full bridge circuit or the voltage doubler circuit). For example, when the form of the existing switch circuit corresponds to the full bridge circuit, the wireless power reception device 103 may maintain the rectification circuit 255 as the full bridge circuit.

Through the above described method, the wireless power reception device 103 may control the switch circuit to be the voltage doubler circuit or the full bridge circuit, based on the size of the current provided to the charging circuit 244, so as to increase power transmission efficiency. Further, the wireless power reception device 103 may reduce power loss due to wireless power transmission and reception.

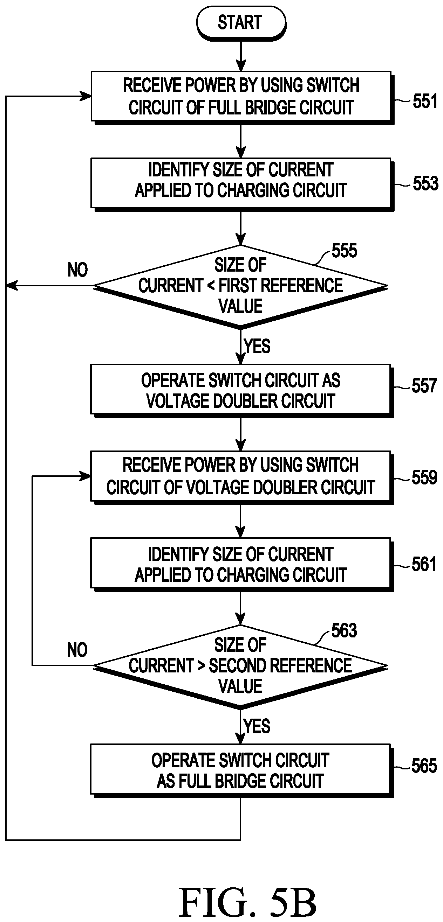

FIG. 5B is a flowchart illustrating a method by which the wireless power reception device controls the form of the switch circuit, based on the size of the current applied to the charging circuit according to various embodiments.

Referring to FIG. 5B, according to various embodiments, in operation 551, the wireless power reception device 103 may receive power from the wireless power transmission device 101 by using the switch circuit of the full bridge circuit (or the switch circuit operating as the full bridge circuit). For example, the wireless power reception device 103 may provide power to the charging circuit 244 in the state where the switch circuit including the plurality of switches S1, S2, S3, and S4 operates as the full bridge circuit.

According to various embodiments, in operation 553, the wireless power reception device 103 may identify the size of the current applied to the charging circuit 244. In operation 555, the wireless power reception device 103 may identify whether the size of the current is smaller than the first reference value.

According to various embodiments, when it is identified that the size of the current is not smaller than the first reference value (No of operation 555), the wireless power reception device 103 may not control the operation of the switch circuit. Further, the wireless power reception device 103 may supply power to the charging circuit 244 while continuously maintaining the operation of the switch circuit as the full bridge circuit.

According to various embodiments, when it is identified that the size of the current is smaller than the first reference value (Yes of operation 555), the wireless power reception device 103 may operate the switch circuit as the voltage doubler circuit in operation 557. In operation 559, the wireless power reception device 103 may receive power from the wireless power transmission device 101 by using the switch circuit of the voltage doubler circuit (or the switch circuit operating as the voltage doubler circuit). For example, the wireless power reception device 103 may supply power to the charting circuit 244 by using the switch circuit of the voltage doubler circuit.

According to various embodiments, in operation 561, the wireless power reception device 103 may identify the size of the current provided to the charging circuit 244. In operation 563, the wireless power reception device 103 may identify whether the size of the current is larger than the second reference value. For example, the second reference value may be larger than the first reference value.

According to various embodiments, when it is identified that the size of the current is not larger than the second reference value (No of operation 563), the wireless power reception device 103 may not control the operation of the switch circuit. Further, the wireless power reception device 103 may supply power to the charging circuit 244 while continuously maintaining the operation of the switch circuit as the voltage doubler circuit.

According to various embodiments, when it is identified that the size of the current is larger than the second reference value (Yes of operation 563), the wireless power reception device 103 may operate the switch circuit as the full bridge circuit in operation 565. The wireless power reception device 103 may supply power to the charging circuit 244 by using the switch circuit of the full bridge circuit (or the switch circuit operating as the full bridge circuit).

As described in FIGs. 5A and 5B, the wireless power reception device 103 may determine the efficient form of the switch circuit (for example, the full bridge circuit or the voltage doubler circuit) by using at least one reference value. However, the number of reference values is only an example, and embodiments of the disclosure are not limited thereto.

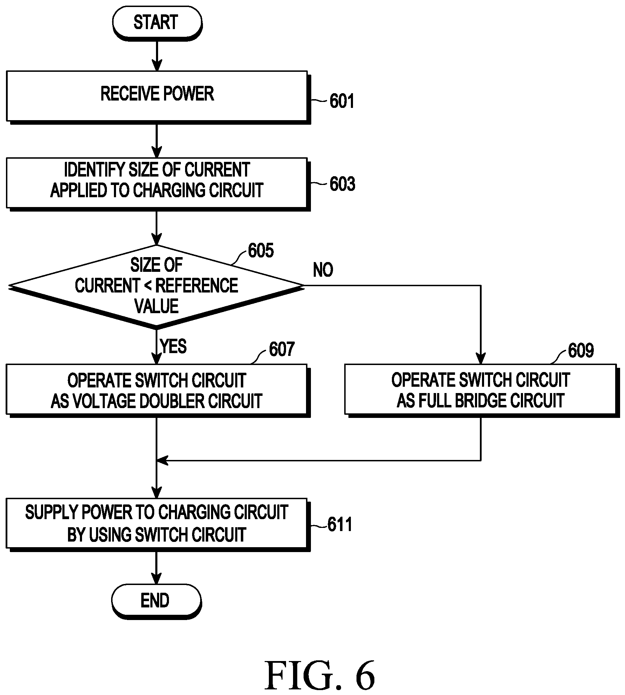

FIG. 6 is a flowchart illustrating a method by which the wireless power reception device controls the form of the switch circuit, based on the size of the current applied to the charging circuit according to various embodiments of the disclosure.

Referring to FIG. 6, according to various embodiments, in operation 601, the wireless power reception device 103 may receive power from the wireless power transmission device 101. For example, the wireless power reception device 103 may rectify, through the rectification circuit 255, the power received from the wireless power transmission device 101 to charge a battery included in the power reception device 103.

According to various embodiments, in operation 603, the wireless power reception device 103 may identify the size of the current applied to the charging circuit 244. For example, the wireless power reception device 103 may identify the size of the current applied in real time or periodically to the charging circuit 244.

According to various embodiments, in operation 605, the wireless power reception device 103 may identify whether the size of the current is smaller than a reference value. For example, the reference value may be a reference value for determining whether to operate the switch circuit including the plurality of switches S1, S2, S3, and S4 as the voltage doubler circuit or as the full bridge circuit.

According to various embodiments, when it is identified that the size of the current is smaller than the reference vale (Yes of operation 605), the wireless power reception device 103 may operate the switch circuit as the voltage doubler circuit in operation 607. In operation 611, the wireless power reception device 103 may supply power to the charging circuit 244 by using the switch circuit of the voltage doubler circuit.

According to various embodiments, when it is identified that the size of the current is not smaller than the reference value (No of operation 605), the wireless power reception device 103 may operate the switch circuit as the full bridge circuit in operation 609. In operation 611, the wireless power reception device 103 may supply power to the charging circuit 244 by using the switch circuit of the full bridge circuit.

Through the above described method, the wireless power reception device 103 may control the switch circuit to be the voltage doubler circuit or the full bridge circuit, based on the size of the current provided to the charging circuit 244, so as to increase power transmission efficiency. Further, the wireless power reception device 103 may reduce power loss due to wireless power transmission and reception.

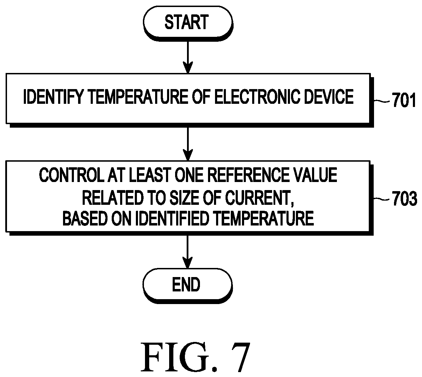

FIG. 7 is a flowchart illustrating a method by which the wireless power reception device controls the reference value, based on temperature according to various embodiments.

Referring to FIG. 7, according to various embodiments, in operation 701, an electronic device (hereinafter, referred to as the wireless power reception device 103) wirelessly receiving power may identify temperature of at least one point of the wireless power reception device 103.

According to various embodiments, in operation 703, the wireless power reception device 103 may control at least one reference value (for example, the first reference value and/or the second reference value of FIGs. 5A and 5B, and the reference value of FIG. 6) related to the size of the current, based on the identified temperature. For example, the size of the power provided to the charging circuit 244 may vary depending on a temperature change. Accordingly, the wireless power reception device 103 may control at least one reference value (for example, the first reference value and/or the second reference value of FIGs. 5A and 5B, and the reference value of FIG. 6), based on the identified temperature, so as to optimize a point where the form of the switch circuit is changed.

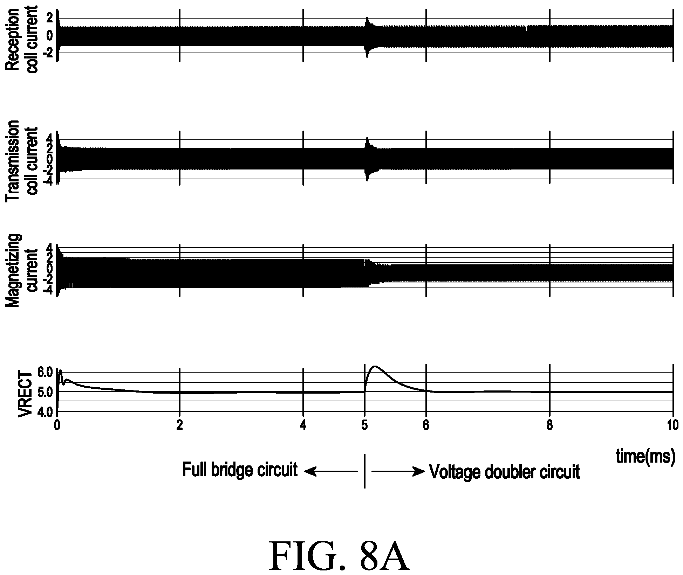

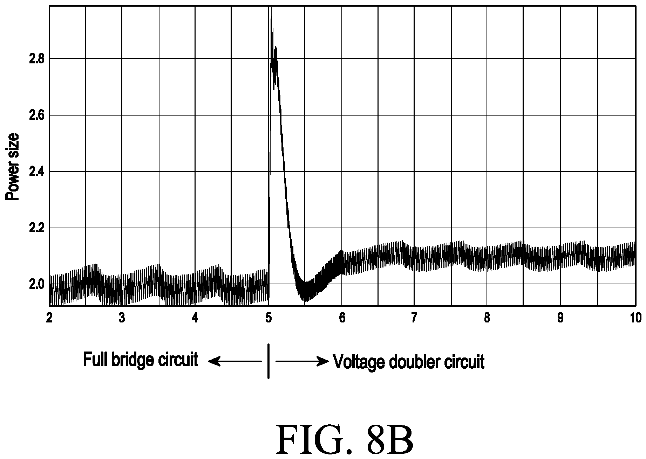

FIG. 8A illustrates graphs for the current conducted to the reception coil, the current conducted to the transmission coil, the magnetizing current of the wireless power transmission device 101, and the rectified voltage (VRECT) when the size of the current applied to the charging circuit 244 is a first value (for example, 300 mA) according to various embodiments. FIG. 8B illustrates the size of power required for providing the current having the first value to the charging circuit 244 according to various embodiments.

Referring to FIGs. 8A and 8B, the wireless power reception device 103 may change the switch circuit from the full bridge form to the voltage doubler form at a specific time point (for example, 5 ms).

According to various embodiments, when a change from the full bridge circuit to the voltage doubler circuit is made, the coil voltage (VC) may be reduced 1/2 times the rectified voltage (VRECT). Accordingly, the size of the magnetizing current may decrease. However, as the coil voltage (VC) decreases, the size of the current conducted to the reception coil 221 may increase. Further, the size of the current conducted to the transmission coil 213 of the wireless power transmission device 101 may also increase. At this time, due to the increase in the current conducted to the reception coil 221 and the transmission coil 213, power transmission efficiency may decrease.

Referring to FIG. 8B, when the form of the rectification circuit 255 of the wireless power reception device 103 corresponds to the full bridge circuit, the wireless power transmission device 101 may apply first power (for example, 2.0) in order to provide the current having the first value to the charging circuit 244. When the form of the rectification circuit 255 of the wireless power reception device 103 corresponds to the voltage doubler circuit, the wireless power transmission device 101 may apply second power (for example, 2.1) in order to provide the current having the first value to the charging circuit 244. For example, when the wireless power transmission device 101 provides the current having the first value to the charging circuit 244 of the wireless power reception device 103, smaller power may be required for the full bridge circuit.

According to various embodiments, when the size of the current provided to the charting circuit 244 has the first value, the wireless power reception device 103 may control the switch circuit to be in the full bridge form. The wireless power reception device 103 may supply power to the charging circuit 244 by using the switch circuit in the full bridge form. Accordingly, when the size of the current provided to the charging circuit 244 is larger than the reference value (or the second reference value), the wireless power reception device 103 may control the switch circuit to be in the full bridge form, so as to increase power transmission efficiency.

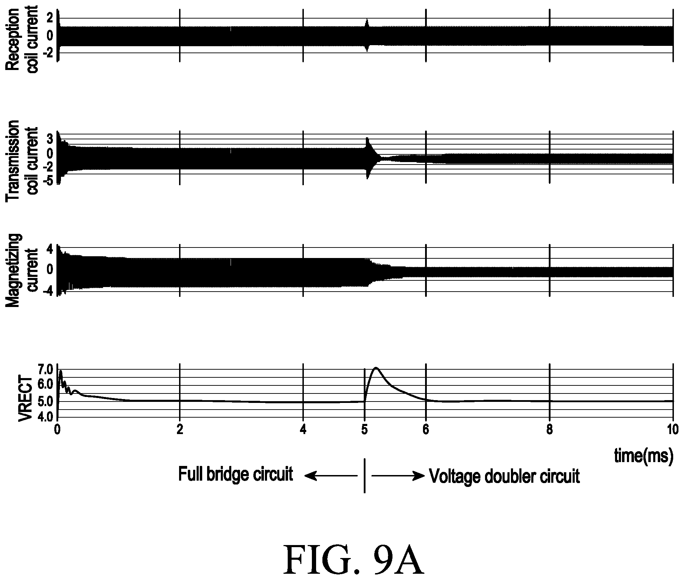

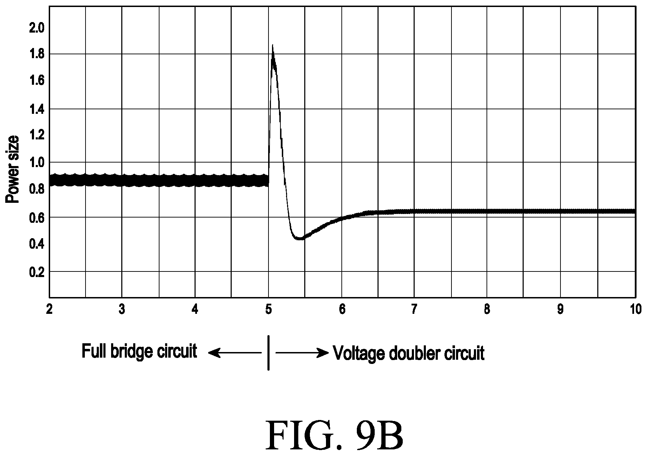

FIG. 9A illustrates graphs for the current conducted to the reception coil 221, the current conducted to the transmission coil 213, the magnetizing current of the wireless power transmission device 101, and the rectified voltage (VRECT) when the size of the current applied to the charging circuit 244 is a second value (for example, 100 mA) (for example, the second value may be smaller than the first value) according to various embodiments. FIG. 9B illustrates the size of power required for providing the current having the second value to the charging circuit 244 according to various embodiments.

Referring to FIGs. 9A and 9B, the wireless power reception device 103 may change the switch circuit from the full bridge form to the voltage doubler form at a specific time point (for example, 5 ms).

Referring to FIG. 9A, according to various embodiments, when a change from the full bridge circuit to the voltage doubler circuit is made, the coil voltage (VC) may be reduced 1/2 times the rectified voltage (VRECT). Accordingly, as the coil voltage (VC) decreases, the size of the current conducted to the reception coil 221 may increase. Further, the size of the magnetizing current may decrease. However, the decrease in the magnetizing current becomes larger than the increase in the current conducted to the reception coil 221, and thus the size of the current conducted to the transmission coil 213 of the wireless power transmission device 101 may decrease. At this time, due to the decrease in the magnetizing current and the decrease in the current conducted to the transmission coil 213, power transmission efficiency may increase.

Referring to FIG. 9B, when the form of the rectification circuit 255 of the wireless power reception device 103 corresponds to the full bridge circuit, the wireless power transmission device 101 may apply first power (for example, 0.9) in order to provide the current having the second value to the charging circuit 244. When the form of the rectification circuit 255 of the wireless power reception device 103 corresponds to the voltage doubler circuit, the wireless power transmission device 101 may apply second power (for example, 0.6) in order to provide the current having the second value to the charging circuit 244. For example, when the wireless power transmission device 101 provides power having the second value to the charging circuit 244 of the wireless power reception device 103, lower power may be required for the voltage doubler circuit.

According to various embodiments, when the size of the current provided to the charging circuit 244 is the second value, the wireless power reception device 103 may control the switch circuit to be in the voltage doubler form. The wireless power reception device 103 may supply power to the charging circuit 244 by using the switch circuit in the voltage doubler form. Accordingly, when the size of the current provided to the charging circuit 244 is smaller than a reference value (or the first reference value), the wireless power reception device 103 may control the switch circuit to be in the voltage doubler form, so as to increase power transmission efficiency.

The wireless power transmission device 101 and the wireless power reception device 103 may be implemented to be the same as or similar to the following electronic devices 1001, 1002, and 1004.

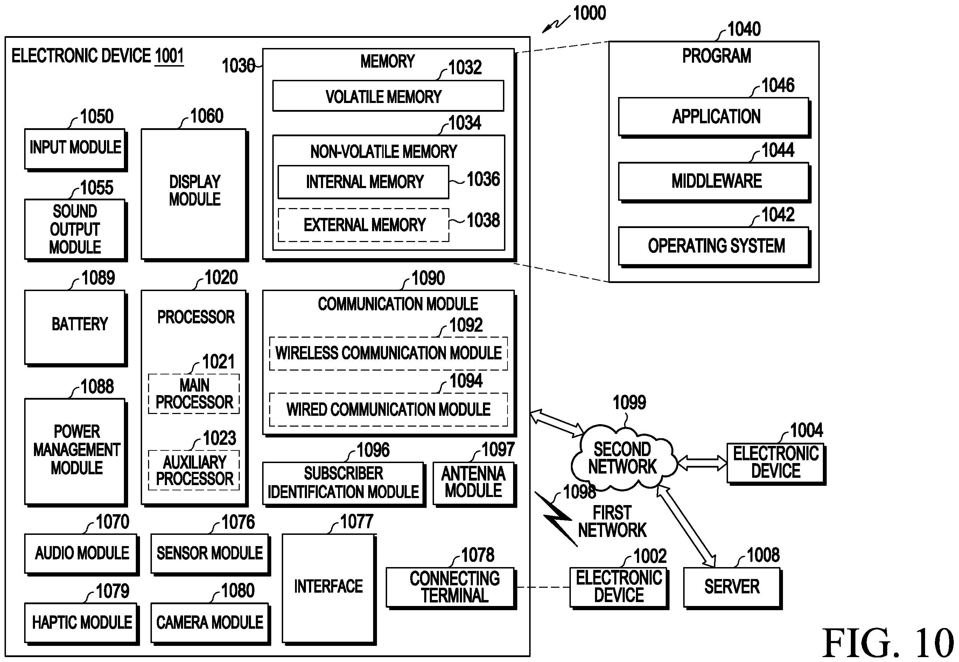

FIG. 10 is a block diagram illustrating an electronic device 1001 in a network environment 1000 according to various embodiments. Referring to FIG. 10, the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to one embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as BluetoothTM, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 or 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In another embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

The electronic device 103 wirelessly receiving power according to various embodiments may include the coil 221, the rectification circuit 255 including the plurality of switches S1, S2, S3, and S4, the charging circuit 244, and the control circuit 250, and the control circuit may be configured to identify a size of a first current output to the charging circuit, based on power wirelessly received from an external electronic device 101, control the rectification circuit to operate the plurality of switches included in the rectification circuit as one of a full bridge circuit or a voltage doubler circuit, based on the size of the first current, and provide power rectified using the rectification circuit to the charging circuit.

The control circuit according to various embodiments may be configured to, when the size of the first current is smaller than a first reference value, control the rectification circuit to operate the plurality of switches as the voltage doubler circuit, and when the size of the first current is larger than a second reference value larger than the first reference value, control the rectification circuit to operate the plurality of switches as the full bridge circuit.

The control circuit according to various embodiments may be configured to, when the size of the first current is not smaller than the first reference value and is not larger than the second reference value, maintain operations of the plurality of switches.

The control circuit according to various embodiments may be configured to measure a temperature of the electronic device and control at least one of the first reference value or the second reference value, based on the measured temperature.

The control circuit according to various embodiments may be configured to, when the size of the first current is smaller than a reference value, control the rectification circuit to operate the plurality of switches as the voltage doubler circuit, and when the size of the first current is larger than the reference value, control the rectification circuit to operate the plurality of switches as the full bridge circuit.

The control circuit according to various embodiments may be configured to measure a temperature of the electronic device and control the reference value, based on the measured temperature.

The rectification circuit according to various embodiments may include a first switch and a second switch connected to one end of the coil, and a third switch and a fourth switch connected to the other end of the coil.

The control circuit according to various embodiments may be configured to control the third switch to be in an open state and control the fourth switch to be in a short-circuit state, so as to be the voltage doubler circuit.

The control circuit according to various embodiments may be configured to control the first switch to be in the short-circuit state and control the second switch to be in the open state during a first period, control the first switch to be in the open state and control the second switch to be in the short-circuit state during a second period after the first period, and control the first switch to be in the open state and control the second switch to be in the open state during a third period after the second period.

The control circuit may be configured to control the first switch and the fourth switch to be in an open state and control the second switch and the third switch to be in a short-circuit state during a first period, and control the first switch and the fourth switch to be in the short-circuit state and control the second switch and the third switch to be in the open state during a second period after the first period, so as to become the full bridge circuit.

A method of operating the electronic device 103 wirelessly receiving power according to various embodiments may include an operation of identifying a size of a first current output to the charging circuit 244 included in the electronic device, based on power wirelessly received from the external electronic device 101 through the coil 221 included in the electronic device, an operation of controlling the rectification circuit to operate the plurality of switches S1, S2, S3, and S4 included in the rectification circuit 255 in the electronic device as one of a full bridge circuit or a voltage doubler circuit, based on the size of the first current, and an operation of providing power rectified using the rectification circuit to the charging circuit.

The operation of controlling the rectification circuit according to various embodiments may include an operation of, when the size of the first current is smaller than a first reference value, controlling the rectification circuit to operate the plurality of switches as the voltage doubler circuit, and an operation of, when the size of the first current is larger than a second reference value larger than the first reference value, controlling the rectification circuit to operate the plurality of switches as the full bridge circuit.

The operation of controlling the rectification circuit according to various embodiments may include an operation of, when the size of the first current is not smaller than the first reference value and is not larger than the second reference value, maintaining operations of the plurality of switches.

The method of operating the electronic device according to various embodiments may further include an operation of measuring a temperature of the electronic device and controlling at least one of the first reference value or the second reference value, based on the measured temperature.

The operation of controlling the rectification circuit according to various embodiments may include an operation of, when the size of the first current is smaller than a reference value, controlling the rectification circuit to operate the plurality of switches as the voltage doubler circuit, and an operation of, when the size of the first current is larger than the reference value, controlling the rectification circuit to operate the plurality of switches as the full bridge circuit.

The method of operating the electronic device according to various embodiments may further include an operation of measuring a temperature of the electronic device and controlling the reference value, based on the measured temperature.

The rectification circuit according to various embodiments may include a first switch and a second switch connected to one end of the coil, and a third switch and a fourth switch connected to the other end of the coil.

The operation of controlling the rectification circuit according to various embodiments may include an operation of controlling the third switch to be in an open state and controlling the fourth switch to be in a short-circuit state, so as to be the voltage doubler circuit.

The operation of controlling the rectification circuit according to various embodiments may include an operation of controlling the first switch to be in the short-circuit state and controlling the second switch to be in the open state during a first period, controlling the first switch to be in the open state and controlling the second switch to be in the short-circuit state during a second period after the first period, and controlling the first switch to be in the open state and controlling the second switch to be in the open state during a third period after the second period.

The operation of controlling the rectification circuit according to various embodiments may include an operation of controlling the first switch and the fourth switch to be in an open state and controlling the second switch and the third switch to be in a short-circuit state during a first period, and controlling the first switch and the fourth switch to be in the short-circuit state and controlling the second switch and the third switch to be in the open state during a second period after the first period, so as to become the full bridge circuit.

A non-transitory recording medium 130 according to various embodiments may store instructions for performing an operation of identifying a size of a first current output to the charging circuit 244 included in the electronic device, based on power wirelessly received from the external electronic device 101 through the coil 221 included in the electronic device 103, an operation of controlling the rectification circuit to operate the plurality of switches S1, S2, S3, and S4 included in the rectification circuit 255 in the electronic device as one of a full bridge circuit or a voltage doubler circuit, based on the size of the first current, and an operation of providing power rectified using the rectification circuit to the charging circuit.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1040) including one or more instructions that are stored in a storage medium (e.g., internal memory 1036 or external memory 1038) that is readable by a machine (e.g., the electronic device 1001). For example, a processor (e.g., the processor 1020) of the machine (e.g., the electronic device 1001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device for wirelessly receiving power, the electronic device comprising:
a coil;
a rectification circuit comprising a plurality of switches;
a charging circuit; and
a control circuit, wherein the control circuit is configured to:
identify a size of a first current output to the charging circuit, based on power wirelessly received from an external electronic device;
control the rectification circuit to operate the plurality of switches included in the rectification circuit as one of a full bridge circuit or a voltage doubler circuit, based on the size of the first current; and
provide power rectified using the rectification circuit to the charging circuit.

2. The electronic device of claim 1, wherein the control circuit is configured to:
when the size of the first current is smaller than a first reference value, control the rectification circuit to operate the plurality of switches as the voltage doubler circuit; and
when the size of the first current is larger than a second reference value larger than the first reference value, control the rectification circuit to operate the plurality of switches as the full bridge circuit.

3. The electronic device of claim 2, wherein the control circuit is configured to, when the size of the first current is not smaller than the first reference value and is not larger than the second reference value, maintain operations of the plurality of switches.

4. The electronic device of claim 2, wherein the control circuit is configured to measure a temperature of the electronic device and control at least one of the first reference value or the second reference value, based on the measured temperature.

5. The electronic device of claim 1, wherein the control circuit is configured to:
when the size of the first current is smaller than a reference value, control the rectification circuit to operate the plurality of switches as the voltage doubler circuit; and
when the size of the first current is larger than the reference value, control the rectification circuit to operate the plurality of switches as the full bridge circuit.

6. The electronic device of claim 5, wherein the control circuit is configured to measure a temperature of the electronic device and control the reference value, based on the measured temperature.

7. The electronic device of claim 1, wherein the rectification circuit comprises a first switch and a second switch connected to one end of the coil, and a third switch and a fourth switch connected to the other end of the coil.

8. The electronic device of claim 7, wherein the control circuit is configured to control the third switch to be in an open state and control the fourth switch to be in a short-circuit state, so as to become the voltage doubler circuit.

9. The electronic device of claim 8, wherein the control circuit is configured to control the first switch to be in the short-circuit state and control the second switch to be in the open state during a first period, control the first switch to be in the open state and control the second switch to be in the short-circuit state during a second period after the first period, and control the first switch to be in the open state and control the second switch to be in the open state during a third period after the second period.

10. The electronic device of claim 7, wherein the control circuit is configured to control the first switch and the fourth switch to be in an open state and control the second switch and the third switch to be in a short-circuit state during a first period, and control the first switch and the fourth switch to be in the short-circuit state and control the second switch and the third switch to be in the open state during a second period after the first period, so as to become the full bridge circuit.

11. A method of operating an electronic device wirelessly receiving power, the method comprising:
identifying a size of a first current output to a charging circuit included in the electronic device, based on power wirelessly received from an external electronic device through a coil included in the electronic device;
controlling a rectification circuit to operate a plurality of switches included in the rectification circuit in the electronic device as one of a full bridge circuit or a voltage doubler circuit, based on the size of the first current; and
providing power rectified using the rectification circuit to the charging circuit.

12. The method of claim 11, wherein the controlling of the rectification circuit comprises:
when the size of the first current is smaller than a first reference value, controlling the rectification circuit to operate the plurality of switches as the voltage doubler circuit; and
when the size of the first current is larger than a second reference value larger than the first reference value, controlling the rectification circuit to operate the plurality of switches as the full bridge circuit.

13. The method of claim 12, wherein the controlling of the rectification circuit comprises, when the size of the first current is not smaller than the first reference value and is not larger than the second reference value, maintaining operations of the plurality of switches.

14. The method of claim 12, further comprising measuring a temperature of the electronic device and controlling at least one of the first reference value or the second reference value, based on the measured temperature.

15. The method of claim 11, wherein the controlling of the rectification circuit comprises:
when the size of the first current is smaller than a reference value, controlling the rectification circuit to operate the plurality of switches as the voltage doubler circuit; and
when the size of the first current is larger than the reference value, controlling the rectificatino circuit to operate the plurality of switches as the full bridge circuit.
